# EUROPÄISCHE PATENTSCHRIFT

(11) **EP 0 362 596 B1**
(45) Veröffentlichungstag und Bekanntmachung des Hinweises auf die Patenterteilung: **01.12.1993**
(21) Anmeldenummer: 89117137.3
(22) Anmeldetag: 15.09.1989
(51) Int. Cl.: G21D 9/00

(54) **Heizreaktorsystem mit einer Nachwärmeabfuhr-Schaltung und Verwendung letzterer für Siedewasser- und Druckwasser-Kernreaktoren**
Heat reactor system comprising a residual heat removal system and its use in boiling-water and pressurized-water reactors
Réacteur nucléaire pour chauffage avec système d'élimination de chaleur résiduelle et son utilisation pour des réacteurs à eau bouillante et des réacteurs à eau sous pression

(30) Priorität: 30.09.1988 DE 3833327
(43) Veröffentlichungstag der Anmeldung: 11.04.1990
(73) Patentinhaber: SIEMENS AKTIENGESELLSCHAFT, 80333 München (DE)
(72) Erfinder: Batheja, Pramod, Dipl.-Ing., D-8520 Erlangen (DE); Göbel, Andreas, Dipl.-Ing., D-8521 Spardorf (DE); Rau, Peter, Dipl.-Ing. (FH), D-8551 Leutenbach (DE)

(56) Entgegenhaltungen:
- CH-A- 539 927
- DE-A- 2 112 228
- DE-A- 2 621 258
- DE-A- 3 021 965
- DE-B- 2 459 150
- NUCLEAR EUROPE, Band VII, Nr. 11-12, November, Dezember 1987, CH-3001, Bern E.KNOGLINGER et al. "SWISS-Chinese Cooperation in Developing a Small Integral Heating Reactor System", Seiten 28-30.
- msr, Nr. 11, 21. Jahrgang, November 1978, Berlin, VEB Verlag Technik H.BROMBACH "Konstruktion und Leistung von Wirbel- geräten" Seiten 638-642

## Beschreibung

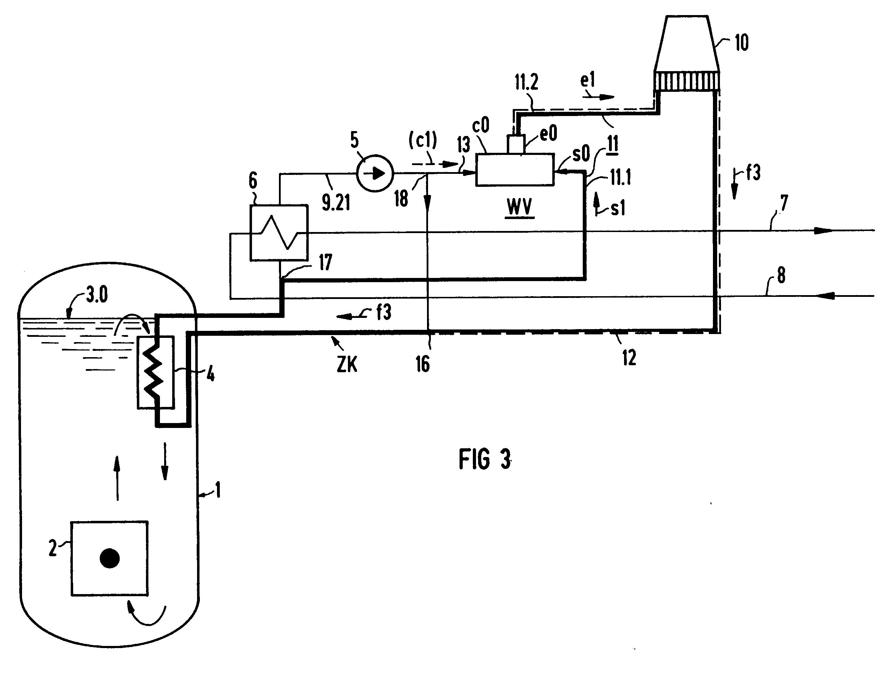

Die Erfindung befaßt sich mit einem Heizreaktorsystem des grundsätzlichen Aufbaus, wie es in der Zeitschrift "Nuclear Europe", 11-12/1987, Seiten 28 bisa 30, insbesondere in Figur 3 der Seite 29, dargestellt ist. Dabei handelt es sich um ein Heizreaktorsystem, insbesondere für Heizwasserreaktoren, mit einem Kernreaktor und einem zugehörigen Reaktordruckbehälter, dessen Kern von einem umwälzbaren Primärkühlmittel kühlbar ist, mit einem ersten und zweiten Wärmetauscher, wobei die Primärseite des ersten Wärmetauschers vom Primärmedium durchströmbar ist und die Primärseite des zweiten Wärmetauschers mit der Sekundärseite des ersten Wärmetauschers über einen Zwischenkreislauf für ein Sekundärkühlmittel verbunden ist, und mit einer Nachwärmeabfuhr-Schaltung, welche einen Nachwärmeabfuhr-Kühler enthält, welche über Kühler-Anschlußleitungen in Form einer Zuströmleitung und einer Rückströmleitung an die Sekundärseite des ersten Wärmetauschers angeschlossen ist und in deren Kühler-Anschlußleitungen wenigstens ein Durchsatz-Stellorgan eingefügt ist. Beim bekannten Heizreaktorsystem umfaßt der Nachwärmeabfuhr-Kühler mehrere Luftkühler, die allerdings nicht direkt an die Stränge des Zwischenkreislaufs angeschlossen sind, sondern mittelbar über einen Zwischenwärmetauscher. Der Zwischenwärmetauscher seinerseits ist über eine Vorlauf-und über ein Rücklaufleitung, in welchen Absperrventile angeordnet sind, an den heißen bzw. an den kalten Sekundärkühlmittelstrang des Zwischenkreislaufes angeschlossen. Das bekannte Heizreaktorsystem ist für eine thermische Leistung von 5 MW vorgesehen.

Die vorliegende Erfindung befaßt sich mit Heizreaktorsystemen im thermischen Leistungsbereich von ca. 5 bis 200 MW. Sie geht von der Überlegung aus, daß bei einem solchen Heizreaktorsystem alle Untersysteme möglichst einfach aufgebaut sein müssen, ohne daß irgendwelche Einbußen an Sicherheit damit verbunden wären. Befinden sich in einer Nachwärmeabfuhr-Schaltung Ventile oder Antriebspumpen, so schlagen solche Aggregate nicht nur mit ihrem eigentlichen Preis, sondern zusätzlich mit ihrer Stromversorgung (eventuell Notstromversorgung) und ihrer Überwachung zu Buche. Darüber hinaus müssen sicherheitsrelevante Schaltorgane redundant ausgeführt sein.

Der vorliegenden Erfindung liegt die Aufgabe zugrunde, ein Heizreaktorsystem mit einer verbesserten Nachwärmeabfuhr-Schaltung zu schaffen, derart, daß man zum Umschalten von Normalbetrieb des Heizreaktors auf Nachwärmeabfuhr-Betrieb ohne die Absperr- oder Stellventile der herkömmlichen Bauart auskommt, d.h. ohne Ventile, die sogenannte Ventilkegel oder Verschlußstücke aufweisen, die mit einem Ventilstößel oder dergleichen mechanisch gegen einen Ventilsitz gepreßt werden (Schließstellung) bzw. von diesem Sitz abgehoben werden (Offenstellung). Die Umschaltung der Kernkühlung von Normalbetrieb auf Nachwärmeabfuhr-Betrieb soll vielmehr ohne solche Armaturen möglich sein, derart, daß eine sogenannte passive und zugleich inhärent sichere Nachwärmeabfuhr-Schaltung vorliegt, d.h. andersartig zum bekannten Heizreaktorsystem nach "Nuclear Europe", wo im Nachwärmeabfuhrfall das Sekundärmedium des Zwischenkreislaufes durch das Öffnen von herkömmlichen Ventilen über die Nachwärmeabfuhr-Kühler geführt wird.

Zur Lösung der gestellen Aufgabe ist Gegenstand der Erfindung ein Heizreaktorsystem, insbesondere für Leichtwasserreaktoren, mit einem Kernreaktor und einem zugehörigen Reaktordruckbehälter, dessen Kern von einem umwälzbaren Primärkühlmittel kühlbar ist, mit einem ersten, zweiten und gegebenenfalls einem dritten Wärmetauscher, wobei die Primärseiten des ersten und gegebenenfalls dritten Wärmetauschers vom Primärmedium durchströmbar sind und die Primärseite des zweiten Wärmetauschers mit der Sekundärseite des ersten Wärmetauschers (4) über einen Zwischenkreislauf für ein Sekundärkühlmittel verbunden ist, und mit einer Nachwärmeabfuhr-Schaltung, welche einen Nachwärmeabfuhr-Kühler enthält, welche über Kühler-Anschlußleitungen in Form einer Zuströmleitung und einer Rückströmleitung an die Sekundärseite des ersten Wärmetauschers oder des gegebenenfalls dritten Wärmetauschers angeschlossen ist und in deren Kühler-Anschlußleitungen wenigstens ein Durchsatz-Stellorgan eingefügt ist,
mit dem weiteren Merkmal, daß als Durchsatz-Stellorgan ein Wirbelkammerventil vorgesehen ist.

Wirbelkammerventile sind rein fluidische Elemente, die ausschließlich aufgrund von Strömungseffekten arbeiten, keine beweglichen Teile besitzen und keine systemexterne Hilfsenergie benötigen. Man vergleiche hierzu den Aufsatz "Konstruktion und Leistung von Wirbelgeräten" von H. Brombach in der Zeitschrift "messen - steuern - regeln", VEB Verlag Technik, Berlin, Heft 11, November 1978, S. 638 - 642, insbesondere Seiten 641 und 642.

Vorteilhafte Weiterbildungen des Gegenstandes des Patentanspruchs 1 sind in den Patentansprüchen 2 bis 11 angegeben.

Der mit der Erfindung erzielbare Vorteil ist vor allem darin zu sehen, daß sogenannte Motorarmaturen (fernsteuerbare, motorangetriebene Ventile) oder andere herkömmliche Verschlußstück und Ventilsitz aufweisende Ventile in Mehrfachanordnung entfallen können; die Nachwärmeabfuhr-Schaltung mit dem Wirbelkammerventil sorgt für die automatische, inhärent sichere Umschaltung ohne mechanisch bewegte Teile auf hydraulischem bzw. fluidischem Wege.

Gemäß einer bevorzugten Ausführungsform der Erfindung besitzt bei einem Heizreaktorsystem mit einer Pumpe im Zwischenkreislauf das Wirbelkammerventil einen Versorgungsanschluß, einen Steueranschluß und einen Auslaßanschluß, wobei der Versorgungsanschluß an den heißen Strang, der Auslaßanschluß über den Nachwärmeabfuhr-Kühler an den kalten Strang und der Steueranschluß auf der Druckseite der Pumpe ebenfalls an den kalten Strang des Zwischenkreislaufs angeschlossen ist. Dadurch erfolgt bei Stillsetzen der Pumpe im Zwischenkreislauf durch das Wirbelkammerventil die automatische Umschaltung auf Nachwärmeabfuhr-Betrieb nach dem Naturumlaufprinzip. Das Wirbelkammerventil wird zu diesem Zweck vorteilhaft in die Zuströmleitung des Nachwärmeabfuhr-Kühlers eingefügt. Nach einer weiteren vorteilhaften Ausführungsform, bei der im Reaktordruckbehälter ein den Kern bedeckendes Wasservolumen als Primärkühlmittel enthalten ist, ist der erste Wärmetauscher im Wasservolumen mit Abstand oberhalb zur Kernoberkante angeordnet und primärseitig vom Primärkühlmittel aufheizbar und sind die an die wärmetauschenden Rohre des ersten Wärmetauschers angeschlossenen Leitungen des Zwischenkreislaufs durch die Wand des Reaktordruckbehälters nach außen hindurchgeführt. Will man den Deckel des Reaktordruckbehälters von solchen Leitungsdurchführungen frei halten, so ist es zweckmäßig, daß die sekundärseitigen, an die wärmetauschenden Rohre des ersten Wärmetauschers angeschlossenen Leitungen durch die Mantelwand des Reaktordruckbehälters unterhalb des Deckelflansches hindurchgeführt sind.

Die Anordnung für den Reaktordruckbehälter des Heizreaktorsystems und die ersten und zweiten Wärmetauscher kann noch kompakter dadurch gestaltet werden, daß auch der zweite Wärmetauscher in integrierter Bauweise innerhalb des vom Reaktordruckbehälter umschlossenen Raumes, vorzugsweise innerhalb des Dampfplenums, angeordnet ist. In diesem Falle sind zweckmäßigerweise eine Vorlaufleitung sowie eine Rücklaufleitung, welche an die wärmetauschenden Rohre des zweiten Wärmetauschers angeschlossen sind, durch die Wand des Reaktordruckbehälters nach außen hindurchgeführt und an ein externes Heiznetz angeschlossen. Auch für die Leitungsdurchführung der Vorlauf- und Rücklaufleitung ist es zur Freihaltung des Reaktordruckbehälter-Deckels zweckmäßig, diese Leitungen durch die Mantelwand des Reaktordruckbehälters unterhalb des Deckelflansches hindurchzuführen.

Umfaßt das Heizreaktorsystem nach der Erfindung innerhalb seines ein Wasservolumen und ein Dampfplenum aufweisenden Reaktordruckbehälters zusätzlich zu seinem ersten und seinem zweiten Wärmetauscher einen dritten Wärmetauscher, an dessen Sekundärseite der Nachwärmeabfuhr-Kühler über Kühler-Anschlußleitungen in Form einer Zuströmleitung und einer Rückströmleitung angeschlossen ist, wobei in die Kühleranschlußleitungen ein Wirbelkammerventil als Durchsatz-Stellorgan eingefügt ist, dann ist es zweckmäßig, daß der dritte Wärmetauscher ein Dampfkondensator ist, welcher im Dampfplenum des Reaktordruckbehälters angeordnet ist.

Ein solches Heizreaktorsystem, das in den Ansprüchen 8 bis 11 näher definiert ist, ist bevorzugt für kleinere Heizreaktoren im Leistungsbereich der thermischen Reaktorleistung zwischen ca. 5 und 50 MW geeignet, wogegen das Heizreaktorsystem nach den Ansprüchen 1 bis 7 für Heizreaktoren mittlerer und größerer Leistung im thermischen Leistungsbereich von insbesondere 50 bis 200 MW geeignet ist. Auch bei dieser Ausführungsform des Heizreaktorsystems wird zweckmäßigerweise der zwischen Steueranschluß und Auslaßanschluß gebildete interne steuerbare Strompfad des Wirbelkammerventils in die Zuströmleitung des Nachwärmeabfuhr-Kühlers eingefügt.

Zur Steuerung des Wirbelkammerventils bieten sich bei dieser Ausführung des Heizreaktorsystems zwei vorteilhafte Möglichkeiten an. Gemäß der einen Ausführung ist vorgesehen, daß in die Rücklaufleitung eines externen Heiznetzes eine einstellbare Drossel eingefügt ist, mit deren Druckseite eine zum Steueranschluß des Wirbelkammerventils führende Steuerleitung verbunden ist, und daß die Rückströmleitung des Nachwärmeabfuhr-Kühlers mit einem Leitungszweig an die der Druckseite abgewandte Seite der Drossel angeschlossen ist. Hierbei erfolgt die automatische Umschaltung auf Nachwärmeabfuhr-Betrieb durch das Wirbelkammerventil, wenn die im externen Heiznetz normalerweise arbeitende Pumpe abgestellt wird.

Gemäß der zweiten vorteilhaften Ausführungsform ist vorgesehen, daß eine in einem Steuerstrompfad liegende Steuerstrompumpe über eine Saugleitung an die Rückströmleitung und über eine Druckleitung an den Steueranschluß des Wirbelkammerventils angeschlossen ist, wobei durch die Steuerstrompumpe im Normalbetrieb des Heizreaktors ein den internen steuerbaren Strompfad des Wirbelkammerventils absperrender oder stark drosselnder Steuerdruck erzeugbar ist und wobei Mittel zur Stillsetzung der Pumpe bei Abschaltung des Heizreaktors vorgesehen sind. Die Pumpe ist hierbei ein sogenannter Dauerläufer kleinerer Leistung, und sie ist nur zum Zwecke der Druckerzeugung für den Steuerstrom vorgesehen. Die Mittel zur Stillsetzung der Pumpe bei Abschaltung des Heizreaktors können bevorzugt dadurch verwirklicht werden, daß man die Stromversorgung für den die Steuerstrompumpe antreibenden Motor unterbricht, wenn die Steuerstäbe des Heizreaktors in ihre Abschaltstellung gelangen (in den Reaktorkern vollständig eingefahrene Position).

Gegenstand der Erfindung ist auch die Verwendung des Heizreaktorsystems mit Nachwärmeabfuhr-Schaltung und mit Wirbelkammerventil, wie sie in den Patentansprüchen 1 bis 11 definiert ist, zur Abfuhr der Nachzerfallswärme bei einem Siedewasser-Kernreaktor oder einem Druckwasser-Kernreaktor, die zur Erzeugung von Treibdampf für einen Dampfturbosatz dienen. Bei einem Heizreaktor herrscht im Reaktordruckbehälter normalerweise ein Druck von ca. 15 bar, bei einem Siedewasser-Kernreaktor ein Druck von ca. 70 bar und bei einem Druckwasser-Kernreaktor ein Druck von ca. 150 bar. Wegen des höheren Betriebsdruckes im Reaktordruckbehälter sind die Wandstärken dieses Behälters sowie auch die Wandstärken der daran angeschlossenen Rohrleitungen und Komponenten, die diesem Druck ausgesetzt sind, größer. Dies muß berücksichtigt werden, wenn man zum Zwecke der Nachwärmeabfuhr einen Wärmetauscher oder mehrere Wärmetauscher im Inneren eines Kernreaktor-Druckbehälters unterbringt und die sekundärseitigen Leitungen dieses Wärmetauschers durch die Wand des Reaktordruckbehälters nach außen hindurchführt sowie als Zuströmleitung und Rückströmleitung an einen Nachwärmeabfuhr-Kühler zusammen mit einem zugehörigen Wirbelkammerventil anschließt. Zwei vorteilhafte Ausführungsformen für die Verwendung nach Patentanspruch 12 sind in den Patentansprüchen 13 und 14 beschrieben.

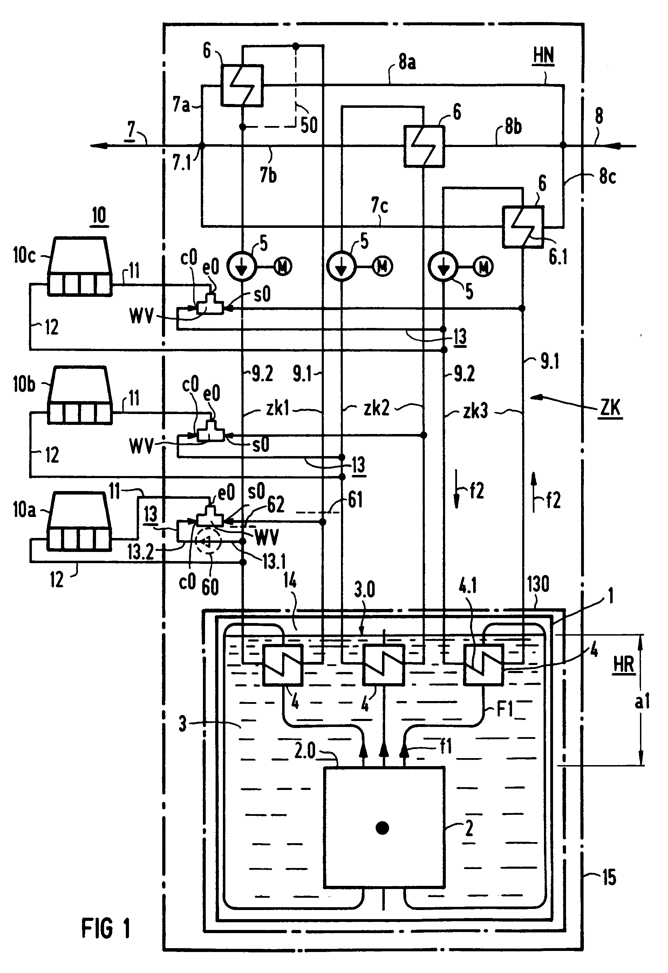

Zur weiteren Erläuterung des Erfindungsgegenstandes und seiner weiteren Vorteile wird im folgenden auf die Figuren 1 bis 9 der Zeichnung Bezug genommen, in welcher mehrere Ausführungsbeispiele sowie der grundsätzlicher Aufbau und die Funktion eines Wirbelkammerventils dargestellt sind. Darin zeigen in vereinfachter Darstellung:
Figur 1 ein dreisträngiges Heizreaktorsystem in vereinfachter Darstellung, wobei jeder der drei Stränge im Zwischenkreislauf über ein Wirbelkammerventil im Notkühlfall automatisch mit einem Nachwärmeabfuhr-Kühler verbunden werden kann (erstes Ausführungsbeispiel);
Figur 2 das Detail eines einzigen Stranges für den Zwischenkreislauf und den daran angeschlossenen Nachwärmeabfuhr- Zweig mit Wirbelkammerventil und NachwärmeabfuhrKühler, wobei die verstärkt ausgezogenen Leitungen den Weg des Sekundärkühlmittels im Normalbetrieb symbolisieren und der Reaktordruckbehälter etwas anders dargestellt ist als in Figur 1;
Figur 3 den Gegenstand nach Figur 2 im Nachwärmeabfuhr-Betrieb, wobei das Wirbelkammerventil durchgeschaltet ist und auch hier die verstärkt ausgezogenen Leitungen den Weg des sekundären Kühlmittels symbolisieren;
Figur 4 perspektivisch-schematisch ein Wirbelkammerventil mit drei Leitungsstutzen für die Steuer-, die Versorgungs- und die Auslaßleitung;
Figur 5 ein Strömungsbild für das Wirbelkammerventil nach Figur 4;
FIG. 6 ein übliches Schaltbild für das Wirbelkammerventil nach FIG. 4;
FIG. 7 ein zweites Ausführungsbeispiel für ein Heizreaktorsystem nach der Erfindung, wobei der Zwischenkreislauf dreisträngig, der Nachwärmeabfuhr-Zweig jedoch aus Vereinfachungsgründen wie in FIG 2 und FIG 3 nur einsträngig dargestellt sind;
FIG 8 ein drittes Ausführungsbeispiel für ein Heizreaktorsystem nach der Erfindung, welches aus Vereinfachungsgründen wieder nur einsträngig dargestellt ist und bei dem der zweite Wärmetauscher sich innerhalb des Reaktordruckbehälters befindet, ebenso wie ein Dampfkondensator, an welchen der Nachwärmeabfuhr-Zweig im Notkühlfall über ein Wirbelventil anschließbar ist;
FIG 9 eine Variante zum Ausführungsbeispiel nach FIG 8 im Ausschnitt, wobei zur Erzeugung des Steuerstromdruckes für das Wirbelkammerventil ein Steuerstrompfad mit gesonderter Steuerstrompumpe vorgesehen ist.

Das Heizreaktorsystem nach Figur 1 zeigt einen als Ganzes mit HR bezeichneten atomaren Heizreaktor mit Reaktordruckbehälter 1, Reaktorkern 2 und darin im Naturumlauf umgewälztem Primärkühlmittel in Form von leichtem Wasser, dessen Volumen 3 den Reaktorkern 2 umgibt und dessen Wasserspiegel 3.0 mit Abstand al zur und oberhalb der Kernoberkante 2.0 sich befindet. Wie die Strömungslinien F1 mit den Strömungspfeilen f1 es zeigen, strömt das Primärkühlmittel im Naturumlauf ohne besondere Umwälzpumpen, obwohl die Erfindung auf eine solche Naturumlauf-Ausführung nicht beschränkt ist; es könnten zur Vergrößerung der pro Zeiteinheit umgewälzten Primärkühlmittelmenge auch interne oder externe Umwälzpumpen eingesetzt sein. Der Reaktorkern besteht, wie üblich, aus langgestreckten Brennelementen, wobei in und gegebenenfalls zwischen den Brennelementen vertikale, in axialer Richtung der Brennelemente verlaufende Kühlkanäle vorgesehen sind, durch welche das Primärkühlmittel von unten nach oben hindurchströmt, wobei es sich erwärmt und - da nun spezifisch leichter - aufgrund von Auftriebskräften nach oben durch die Primärseite von ersten Wärmetauschern 4 hindurchströmt.

Diese Wärmetauscher 4 sind bevorzugt, wie dargestellt, im Wasservolumen 3 angeordnet und werden, wie erwähnt, primärseitig vom Primärkühlmittel durchströmt und aufgeheizt. Sekundärseitig werden diese ersten Wärmetauscher 4 innerhalb der schematisch dargestellten wärmetauschenden Rohre 4.1 gemäß Pfeilrichtung f2 von dem durch wenigstens eine Pumpe 5 umgewälzten Sekundärkühlmittel eines Zwischenkreislaufes ZK durchströmt. Es sind drei erste Wärmetauscher 4 und dementsprechend drei daran angeschlossene Stränge zk1, zk2 und zk3 des Zwischenkreislaufes ZK mit je einer Umwälzpumpe 5 für das Sekundärkühlmittel und je einem zweiten Wärmetauscher 6 dargestellt.

Zur Funktion des Heizreaktorsystems HR ist es erforderlich, daß mindestens ein erster Wärmetauscher 4 mit mindestens einem der Stränge zk1 bis zk3 und einem der zweiten Wärmetauscher 6 sowie einer zugehörigen Umwälzpumpe 5 vorgesehen ist; dargestellt ist eine Dreifach-Anordnung, um zu demonstrieren, daß je nach Größe eines angeschlossenen externen Heiznetzes HN und der abverlangten Wärmemengen der Zwischenkreislauf ZK nicht nur einen, sondern zwei, drei oder noch mehr Stränge aufweisen kann, wodurch auch die Baugröße des Reaktordruckbehälters 1 beeinflußt wird.

Die zweiten Wärmetauscher 6 werden also primärseitig vom Sekundärkühlmittel aufgeheizt; ihre wärmetauschenden Rohre bzw. Rohrschlangen sind wiederum schematisch dargestellt und mit 6.1 bezeichnet. Auf ihrer Sekundärseite werden sie von dem tertiären Kühlmittel des Heiznetzes HN durchströmt; sie sind zu diesem Zweck sekundärseitig an Vorlaufleitungen 7a, 7b, 7c angeschlossen, welche im Verzweigungspunkt 7.1 zur gemeinsamen Vorlaufleitung 7 zusammengefaßt sind, und sie sind auf ihrer Rücklaufseite jeweils an Heiznetz-Rücklaufleitungen 8a, 8b, 8c angeschlossen, welche sich von der gemeinsamen oder Hauptrücklaufleitung 8 auf die einzelnen zweiten Wärmetauscher 6 aufteilen. Die einzelnen Sstränge zk1 bis zk3 des Zwischenkreislaufes ZK weisen jeweils einen heißen Sekundärkühlmittelstrang 9.1 und einen kalten Sekundärkühlmittelstrang 9.2 auf. Der heiße Strang 9.1 verbindet die Sekundärseite (oder den Auslaß) der wärmetauschenden Rohre 4.1 der ersten Wärmetauscher 4 mit der Zuströmseite bzw. den Einlässen der wärmetauschenden Rohre 6.1 des zweiten Wärmetauschers 6. Der kalte Sekundärkühlmittelstrang 9.2 verläuft jeweils vom Auslaß der wärmetauschenden Rohre 6.1 des zweiten Wärmetauschers 6 über die Umwälzpumpe 5 bis zum Einlaß der wärmetauschenden Rohre 4.1 des ersten Wärmetauschers 4.

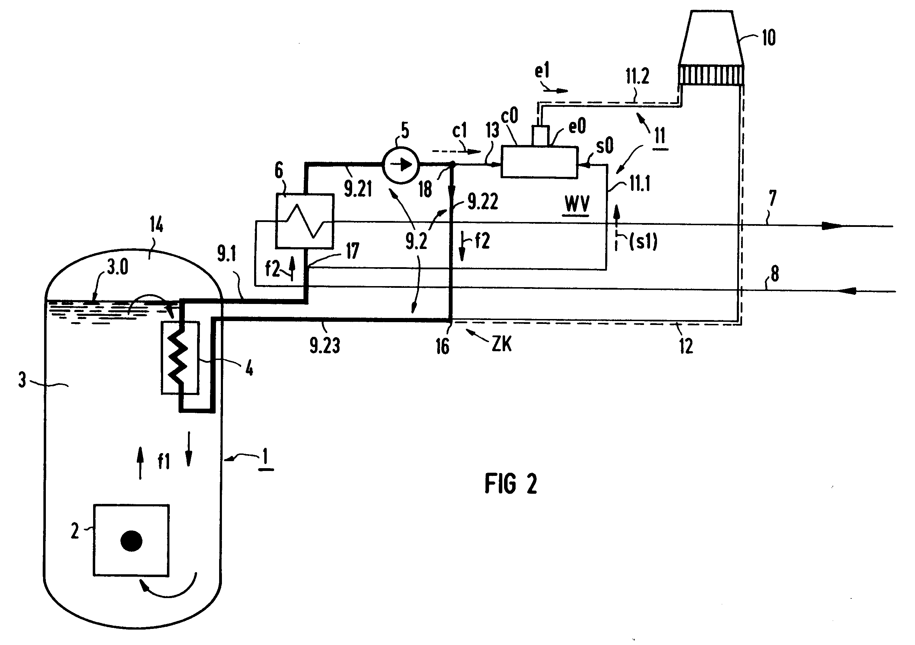

An die Zwischenkreislauf-Stränge zk1, zk2 und zk3 des Zwischenkreislaufes ZK sind jeweils Nachwärmeabfuhr-Kühler 10a, 10b bzw. 10c mit ihren Zuströmleitungen 11 und Rückströmleitungen 12 angeschlossen, wobei die genannten Kühler 10a, 10b, 10c als Ganzes mit Nachwärmeabfuhr-Kühler 10 bezeichnet sind. Die Nachwärmeabfuhr-Kühler 10 bzw. 10a, 10b, 10c sind bevorzugt als Luftkühler ausgeführt, wie schematisch dargestellt. Ihre Zuströmleitung 11 ist jeweils an den heißen Strang 9.1 über den internen, steuerbaren Strompfad s0-e0 eines Wirbelkammerventils WV angeschlossen, dessen hydraulischer Anschluß c0 für den Steuerstrom über die Steuerstromleitung 13 an den kalten Sekundärkühlmittelstrang 9.2 ("kalter Strang") auf der Druckseite der Pumpe 5 des Zwischenkreislaufes ZK angeschlossen ist. Die Rückströmleitung 12 der Nachwärmeabfuhr-Kühler 10 ist jeweils an den kalten Strang 9.2 der Zwischenkreislauf-Stränge zk1, zk2, zk3 auf der Druckseite der Pumpe 5 angeschlossen. Die Funktion der Wirbelkammerventile WV wird weiter unten anhand von Figur 2 und 3 näher erläutert. Wenn der Heizreaktor HR abgeschaltet oder heruntergefahren wird (zu diesem Zweck werden nicht dargestellte Absorber- oder Steuerstäbe in den Reaktorkern 2 eingefahren), dann haben die Nachwärmeabfuhr-Kühler 10 die Aufgabe, die sogenannte Nachzerfallswärme des Heizreaktors HR abzuführen. Dabei wird unterstellt, daß vom externen Heiznetz HN keine Wärme mehr abverlangt wird und die Pumpen 5 nicht mehr laufen. Dies kann der Fall sein, wenn der Heizreaktor HR inspiziert wird dessen Brennelemente umgesetzt oder ausgetauscht werden, wenn durch eine Störung der Heizreaktor HR abgeschaltet wird, oder z.B. dann, wenn im externen Heiznetz HN Änderungs-, Inspektions- oder Reparaturarbeiten ausgeführt werden.

Der Reaktordruckbehälter 1 ist von einem Reaktorsicherheitsbehälter 130 umgeben, wie durch eine gestrichelte Linie schematisch angedeutet. Bei einer eventuellen Leckage des Reaktordruckbehälters 1 wird das Leckwasser im Sicherheitsbehälter 130 aufgefangen, wobei das Wasservolumen 3 so groß gewählt ist, daß bei gleichem Flüssigkeitsstand in den Behältern 1 und 130 der Reaktorkern 2 noch bedeckt ist. Oberhalb des Wasserspiegels 3 befindet sich das Dampfplenum 14. Durch die strichpunktierte Umfassungslinie 15 ist angedeutet, welche der Komponenten und Rohrleitungen des dargestellten Heizreaktorsystems von einem Betonmantel des Reaktorgebäudes umschlossen oder unterirdisch in Betongebäuden untergebracht sind, wobei diese Betongebäude durch schwere Betondecken nach außen abgedeckt und auch gegen Flugzeugabsturz abgesichert sind.

Die vorliegende Erfindung befaßt sich insbesondere mit einem Heizreaktorsystem im thermischen Leistungsbereich von ca. 5 bis 200 MN. Bei einem solchen Heizreaktorsystem müssen alle Untersysteme möglichst einfach aufgebaut sein.

In Figur 2 ist das Heizreaktorsystem mit nur einem einsträngigen Zwischenkreislauf ZK der besseren Übersichtlichkeit wegen dargestellt; es versteht sich, daß zwei, drei oder mehr Stränge zk1, zk2 usw. (vgl. Figur 1) vorgesehen sein könnten. Funktionsmäßig gleiche Teile zu Figur 1 sind in Figur 2 und auch den folgenden Figuren mit den selben Bezugszeichen bezeichnet.

Zusätzlich zur Darstellung in Figur 1 sind in den Figuren 2 und 3 für den kalten Strang 9.2 noch Bezugszeichen für einen Leitungsabschnitt 9.21 zwischen dem zweiten Wärmetauscher 6 und der Pumpe 5, für einen Leitungsabschnitt 9.22 zwischen Pumpe 5 und einem Verzweigungspunkt 16 und für einen Leitungsabschnitt 9.23 zwischen dem Verzweigungspunkt 16 und dem ersten Wärmetauscher 4 eingetragen. Schon aus Figur 1 ist zu erkennen, daß es dort herkömmliche Ventile zur Umschaltung auf Notkühlbetrieb nicht gibt; Figur 2 zeigt detaillierter, daß die jeweiligen Durchsatz-Stellorgane für den Nachwärmeabfuhr-Zweig 1o, 11, 12 als ein Wirbelkammerventil WV ausgebildet sind, welches einen hydraulischen Anschluß s0 für den Versorgungsstrom s1, einen Anschluß c0 für den Steuerstrom c1 und einen Anschluß e0 für den Auslaßstrom e1 aufweist. Dabei ist der interne, steuerbare Strompfad s0-e0 über den zugehörigen Zuström-Leitungsabschnitt 11.1 der Zuströmleitung 11 des Kühlers 10 an der Verzweigungsstelle 17 an den heißen Strang 9.1 des Zwischenkreislaufs ZK angeschlossen, und der hydraulische Anschluß c0 für den Steuerstrom c1 ist an der Verzweigungsstelle 18 an die Druckseite der Pumpe 5 des Zwischenkreislaufes angeschlossen.

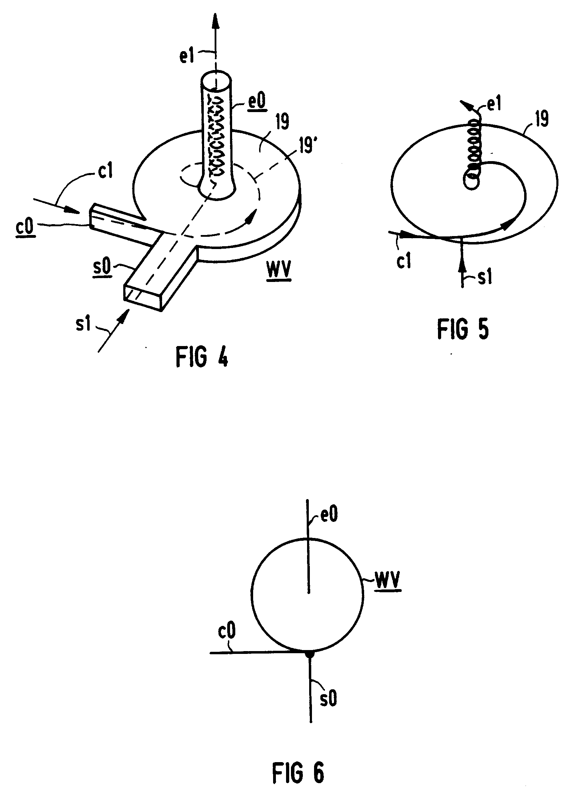

Ein einzelnes solches Wirbelkammerventil WV ist zum besseren Verständnis schematisch in Figur 4 bis 6 dargestellt. Seine hydraulischen Anschlüsse s0, c0 und e0 und Fluidströme, nämlich Versorgungsstrom s1, Steuerstrom c1 und Auslaßstrom e1, sind genauso wie in Figur 2 bezeichnet. Das in Figur 4 beispielsweise dargestellte radiale Wirbelkammerventil WV (es gibt auch axiale und konische Wirbelventile) besteht aus einem flach-hohlzylindrischen Wirbelkammer-Gehäuse 19, welches in seinem Inneren eine Wirbelkammer 19′ enthält, einen radial in die Wirbelkammer 19′ einmündenden Anschlußstutzen für den Versorgungsstrom s1 oder Versorgungsanschluß s0, einem tangential in die Wirbelkammer 19′ einmündenden Anschlußstutzen für den Steuerstrom c1 oder Steueranschluß c0 und einem axial in Bezug auf die Rotationsachse des Gehäuses 19 oder die Wirbelkammer 19′ angeordneten Anschlußstutzen für den Auslaßstrom e0 oder Auslaßanschluß e0. Der Auslaßanschluß e0 kann Düsen- bzw. Venturidüsen-artig ausgebildet sein, wie dargestellt, um den Druckverlust möglichst klein zu halten. Der durch den radial angeordneten Versorgungsanschluß s0 zugeführte, gestrichelt dargestellte Versorgungsstrom s1 verläßt die Wirbelkammer 19′ durch den axialen Auslaßanschluß e0, wobei zunächst unterstellt wird, daß noch kein Steuerstrom c₁ fließt. Dann ist die Drosselwirkung dieses Wirbelkammerventils WV relativ gering, und es gilt s1 = e1. Wird nun ein Steuerstrom c1, dessen Steuerdruck etwa um 5 bis 10 % höher ist als der Druck des Versorgungsstromes s1, durch den tangentialen Steueranschluß c0 geschickt, so wird mit zunehmender Steuerstrommenge auch eine zunehmend intensive Drallströmung in der Wirbelkammer 19′ erzeugt. Deren Fliehkraft bewirkt den Aufbau eines Gegendruckes in der Wirbelkammer 19′ wodurch der Zufluß des Versorgungsstromes s1 verringert (oder bei wieder abnehmendem Steuerstrom c1 wieder vergrößert) und damit gesteuert werden kann. Ein relativ geringer maximaler Steuerstromdurchsatz von etwa 10 bis 20 % des maximalen Durchsatzes des Versorgungsstroms s1 reicht aus, um den Versorgungsstrom s1 zum Erliegen zu bringen. Der Steuerstrom c1 strömt vom tangentialen Steueranschluß c0 in Spiralen dem axialen Auslaßanschluß e0 zu und setzt dieses spiralige Strömung in dessen Stutzen fort. Der Auslaßstrom e1 kann sowohl den Steuerstrom c1 als auch den Versorgungsstrom s1 enthalten. Erreicht jedoch der Durchsatz des Steuerstromes c1 das vorgesehene Maximum von etwa 10 bis 20 % des Versorgungsstromes s1, so kommt letzterer zum Erliegen. Der Auslaßstrom e1 enthält dann nur noch den Steuerstrom c1, so daß dann also etwa 20 % des Durchsatzes des nun weitgehend abgeblockten Versorgungsstromes s1 fließen.

Figur 4 zeigt das Übersichtsbild, Figur 5 ein vereinfachtes Strömungsbild und Figur 6 ein daraus gewonnenes Schaltsymbol das Wirbelkammerventil WV, das vereinfachend auch als Wirbelventil bezeichnet werden kann.

Zurückkommend auf Figur 2: Dort ist der "Normalbetrieb" dargestellt, in welchem das Sekundärkühlmittel des Zwischenkreislaufes ZK durch die Pumpe 5 umgewälzt wird, vgl. die Strömungspfeile f2. Das zugehörige Wirbelkammerventil WV ist mit seinem Steueranschluß c0 (tangentialer Steuerstrom c1) über Leitung 13 an die Druckseite der Pumpe 5 und mit seinem Versorgungsanschluß s0 über die Leitung 11.1 am Verzweigungspunkt 17 an den heißen Strang 9.1 des Zwischenkreislaufes ZK angeschlossen. Läuft die Pumpe 5, so wird der Versorgungsstrom s1 durch den Steuerstrom c1 praktisch abgesperrt, d.h. am Fließen über den Kühler 10 gehindert. Der geringe Steuerstrom c1 fließt über den Auslaßanschluß e0 als Auslaßstrom e1 und über die Leitung 11.2 zum Kühler 10, kühlt sich im Kühler 10 ab und fließt dann über die Rückströmleitung 11.2 zum Verzweigungspunkt 16 zurück, wo er sich mit dem Sekundärkühlmittel im kalten Strang 9.2 des Zwischenkreislaufes ZK mischt. In Figur 2 ist - da bei dem dort dargestellten Betriebszustand praktisch kein Versorgungsstrom s1 fließt - das entsprechende Bezugszeichen in Klammern gesetzt und der zugehörige Strömungspfeil gestrichelt dargestellt, ferner ist der Auslaßstrom e1 wegen des geringen Durchsatzes nur gestrichelt dargestellt.

Figur 3 zeigt den Betriebszustand "Nachwärmeabfuhr". Dabei ist die Pumpe 5 ausgeschaltet. Das Wirbelkammerventil WV hat hier seine Sperrfunktion verloren, da der Steuerstrom c1 (es liegt nur Naturzirkulation vor) aufgrund der Druckverhältnisse zum Erliegen kommt. Das Sekundärkühlmittel des Zwischenkreislaufs ZK zirkuliert, wie durch die Strömungspfeile s1- e1-f3 verdeutlicht, über den Kühler 10. Es fließt kein oder praktisch kein Steuerstrom c1 mehr. Das Bezugszeichen c1 ist deshalb in Klammern gesetzt, und der zugehörige Strömungspfeil ist gestrichelt. Es fließt aber der Versorgungsstrom s1, dessen Durchsatz demjenigen des Auslaßstroms e1 gleich ist. Da die Pumpe 5 stillsteht, stagniert die Strömung auf der Primärseite des zweiten Wärmetauschers 6 und im Leitungsteil 9.21, und auch die für das Heiznetz HN vorgesehene (nicht dargestellte) Förderpumpe arbeitet nicht mehr.

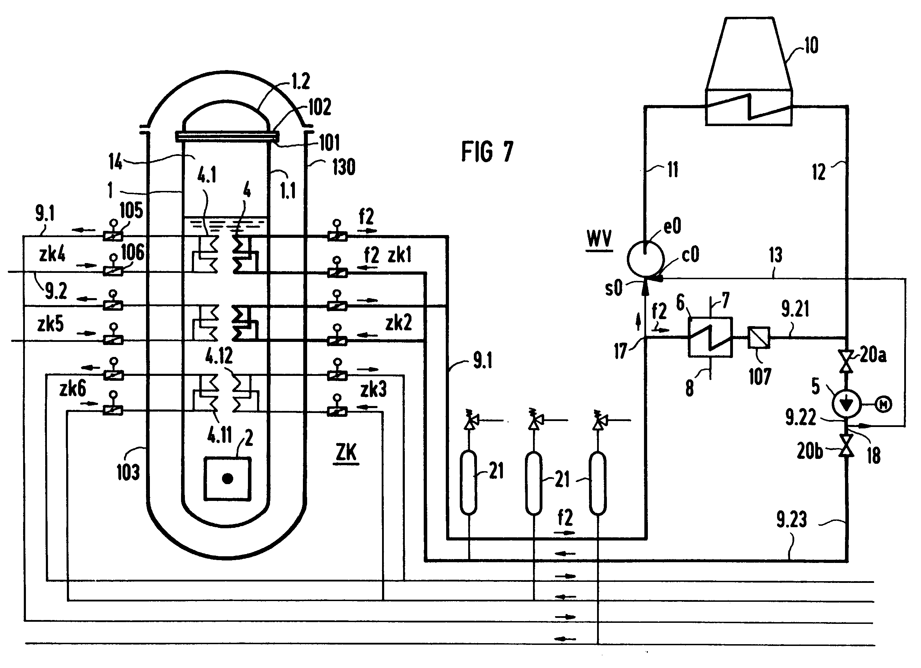

Das Heizreaktorsystem nach Figur 7 entspricht im Prinzip demjenigen nach Figur 1 bis 3; hinzugekommen sind die beiden der Pumpe 5 unmittelbar vor- und nachgeschalteten Isolierventile 20a, 20b, jeweils an die kalten Stränge 9.2 des Zwischenkreislaufes ZK angeschlossene Druckhalter 21, eine Rückschlagklappe 107 im Zweig 9.21, ferner in den dargestellten sechs Strängen zk1 bis zk6 des Zwischenkreislaufes ZK vorgesehene motorbetätigbare Steuerklappen oder -schieber 105 im heißen Strang 9.1 und 106 im kalten Strang 9.2. Die Rückschlagklappe 107 läßt eine primärseitige Strömung durch den zweiten Wärmetauscher 6 nur in Richtung f2 zu. Die Isolierventile 20a, 20b dienen zum Abtrennen der Pumpe 5 vom übrigen Netz bei Wartungs- oder Reparaturarbeiten. Die ersten Wärmetauscher 4 sind im Vergleich zu Figuren 1 bis 3 etwas modifiziert; ihre wärmetauschenden Rohre 4.1 sind in zwei zueinander parallel geschaltete Teil-Rohrbündel bzw. -Rohrschlangen 4.11 und 4.12 aufgeteilt. Man erkennt außerdem, daß die vom ersten Wärmetauscher 4 jeweils abgehenden Leitungen für den heißen Strang 9.1 und den kalten Strang 9.2 des Zwischenkreislaufs ZK durch die Mantelwand 103 des Reaktordruckbehälters 1 unterhalb seiner Deckelflanschverbindung 101, 102 nach außen hindurchgeführt sind. Der Flansch 101 gehört zum Behälterunterteil 1.1 und der Flansch 102 zum Deckel 1.2.

Den Ausführungsbeispielen nach Figur 1 bis 7 liegt eine Schaltung zugrunde, bei der der Nachwärmeabfuhr-Zweig 11, 10, 12 an den heißen bzw. kalten Strang 9.1, 9.2 der Sekundärseite des ersten Wärmetauschers 4 angeschlossen ist. Wenn die Wärmetauscher 4 mit hinreichend großem Abstand zum Reaktorkern 2 innerhalb des Reaktordruckbehälters 1 angeordnet sind, dann ist die Aktivierung des Sekundärkühlmittels relativ gering, und es ist gerechtfertigt, den Nachwärmeabfuhr-Zweig mit dem Sekundärkühlmittel zu beaufschlagen. Grundsätzlich ist es aber auch möglich, zum Zwecke der Nachwärmeabfuhr gesonderte (in Figur 1 bis 7 nicht gezeigte) Dampfkondensatoren im Dampfplenum 14 des Reaktordruckbehälters 1 vorzusehen.

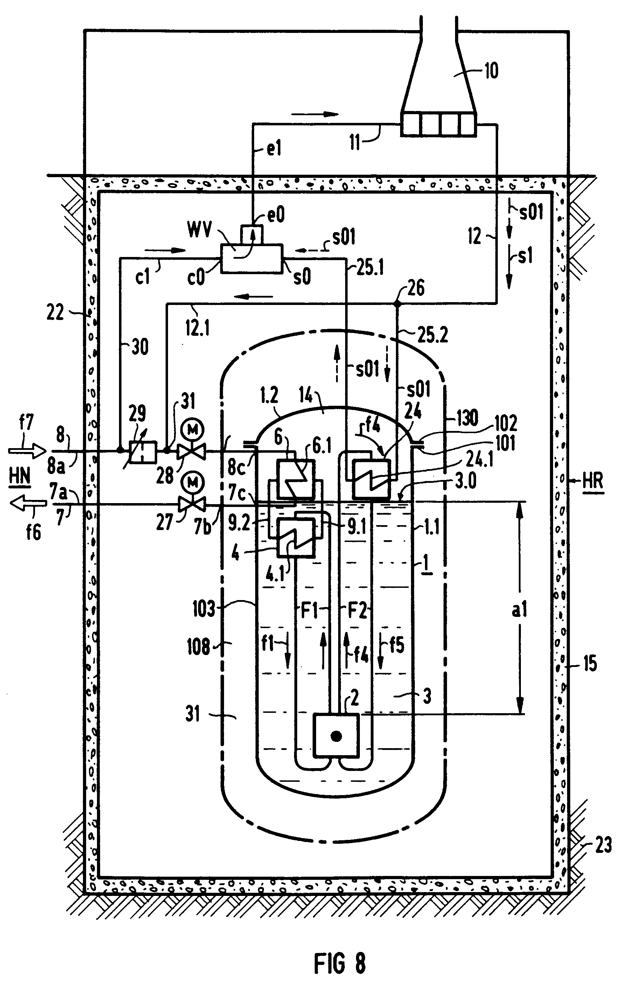

Das in Figur 8 dargestellte Heizreaktorsystem ist vorzugsweise für den thermischen Leistungsbereich von 5 bis 50 MW geeignet. Das Reaktorgebäude ist wieder mit 15 bezeichnet und etwas deutlicher aus Betonwänden bestehend dargestellt; es ist unterirdisch in einer entsprechenden Kammer 22 des Erdreichs 23 angeordnet. Der Nachwärmeabfuhr-Zweig mit seiner Zuströmleitung 11, dem Kühler 10 und der Rückstromleitung 12 ist an den heißen Strang 25.1 eines Dampfkondensators 24 über das Wirbelkammerventil WV, und zwar dessen steuerbaren Strompfad (s0-e0) zwischen Versorgungsanschluß s0 und Auslaßanschluß e0 und an den kalten Strang 25.2 des Dampfkondensators 24 an der Anschlußstelle 26 der Rückströmleitung 12 angeschlossen. Der Dampfkondensator 24 ist im Dampfplenum 14 des Reaktordruckbehälters 1 angeordnet. Durch die Strömungspfade F2 und die Richtungspfeile f4 ist der Weg der im Wasservolumen 3 aufsteigenden Dampfanteile schematisch dargestellt; diese durchströmen die Primärseite des Dampfkondensators 24 und geben dabei, wenn der Dampfkondensator 24 sekundärseitig gekühlt wird, ihre Verdampfungswärme über die Wärmetauscherrohre 24.1 an das in diesen strömende tertiäre Medium ab, wobei sie kondensieren und gemäß Strömungspfeilen f5 in das Wasservolumen 3 zurückströmen.

Im Dampfplenum 14 ist auch der zweite Wärmetauscher 6 - bei diesem Ausführungsbeispiel einer sogenannten integrierten Bauweise - angeordnet, d.h. also innerhalb des vom Reaktordruckbehälter 1 umschlossenen Raumes. Deshalb sind die Vorlaufleitung 7 und die Rücklaufleitung 8 des Heiznetzes HN durch die Wand des Reaktordruckbehälters 1, und zwar vorzugsweise durch die Mantelwand 103, hindurchgeführt und an das Auslaßende bzw. das Einlaßende der wärmetauschenden Rohre 6.1 des zweiten Wärmetauschers 6 angeschlossen. Die Vor- und Rücklaufleitungen sind auf ihrem Wege zum zweiten Wärmetauscher 6 bzw. von diesem auch durch die Wand des Reaktorsicherheitsbehälters 130 hindurchgeführt und durch die Wand des Reaktorgebäudes 15. Die einzelnen Durchführungsstellen sind von außen nach innen gesehen mit 7a, 7b und 7c für die Vorlaufleitung 7 und mit 8a, 8b und 8c für die Rücklaufleitung 8 bezeichnet. Die Durchführungsstellen 7c, 8c der Vorlauf- und Rücklaufleitungen 7, 8 sind unterhalb der druckdichten Deckelflanschverbindung 101, 102 angeordnet. Die Sekundärseite des ersten Wärmetauschers 4, d.h. die Einlaß- und Auslaßenden seiner wärmetauschenden Rohre 4.1, ist über den heißen und den kalten Sekundärkühlmittelstrang 9.1 bzw. 9.2 mit der Primärseite des zweiten (integrierten) Wärmetauschers 6 verbunden. Das Sekundärkühlmittel umspült deshalb die Außenseite der wärmetauschenden Rohre 6.1 des zweiten Wärmetauschers 6, in welchen Rohren 6.1 das Tertiärmedium des Heiznetzes HN im Normalbetrieb strömt.

Innerhalb des Reaktorgebäudes 15 und vorzugsweise außerhalb des Sicherheitsbehälters 130 sind in die beiden Leitungen 7 und 8 (Vorlauf-bzw. Rücklaufleitung) je ein motorgetriebenes fernbetätigbares Ventil 27 bzw. 28 eingefügt. Diese Ventile 27, 28 kann man auch als Isolierventile bezeichnen, weil mit ihnen die Sekundärseite des zweiten Wärmetauschers 6 vom Heiznetz vollständig getrennt werden kann, wenn sich die Ventile 27, 28 in ihrer Schließstellung befinden. In Reihe zum Ventil 28 und diesem vorgeschaltet befindet sich in der Rücklaufleitung 8 eine einstellbare Drossel 29, welche im normalen Heizbetrieb aufgrund des an ihr gebildeten Druckgefälles einen Steuerdruck für den Steuerstrom c1 erzeugt. Der Steuerstrom besteht aus einem vor der Drossel 29 abgezweigten Teilstrom des flüssigen Heizmediums, welcher über die an die Eingangsseite der Drossel 29 angeschlossene Steuerleitung 30 dem Steueranschluß c0 des Wirbelkammerventils WV zugeführt wird.

Die Darstellung der Figur 8 ist ebenso wie diejenige der übrigen Figuren 1 bis 7 schematisch, d.h. Auflager und Halteeinrichtungen für den Sicherheitsbehälter 13, den Reaktordruckbehälter 1, den ersten und zweiten Wärmetauscher 4 bzw. 6, den Dampfkondensator 24 und die Ventile 27, 28, die Drossel 29 sowie für den Reaktorkern 2 sind nicht dargestellt. Das Volumen im Zwischenraum 108 zwischen dem Reaktordruckbehälter 1 und dem Reaktorsicherheitsbehälter 13 einerseits und das Wasservolumen 3 andererseits sind so bemessen, daß im Falle eines Lecks in der Wand des Reaktordruckbehälters 1 sich ein gemeinsamer Flüssigkeitsspiegel für das (jetzt reduzierte) Wasservolumen 3 und das im Raum 108 befindliche Wasservolumen einstellt, derart, daß der Reaktorkern 2 auf jeden Fall mit Primärkühlmittel bedeckt bleibt.

Die Rückströmleitung 12 mündet über einen Leitungszweig 12.1 an der Anschlußstelle 31 zwischen dem Ventil 28 und der Drossel 29. Im Normalbetrieb, wenn also das Heizmedium im nicht näher dargestellten Heiznetz gemäß den Strömungspfeilen f6 (Vorlauf) und f7 (Rücklauf) strömt, drosselt die Drossel 29 soweit ab, daß der Staudruck an ihrer Eingangsseite als Steuerdruck am Steueranschluß c0 des Wirbelkammerventils WV sich auswirkt, und zwar so, daß der steuerbare Strompfad s0-e0 weitgehend abgesperrt ist, so daß sich ein nennenswerter Versorgungsstrom s1 über den heißen Strang 25.1 des Dampfkondensators 24 nicht aufbauen kann. Ein erster Anteil des Heizmediums fließt also direkt über die Drossel 29 und das Ventil 28 zum zweiten Wärmetauscher 6, ein zweiter (im Normalbetrieb kleinerer) Anteil fließt über die Steuerleitung 30 und die Steueranschluß-Auslaßanschluß-Strecke c0-e0 des Wirbelkammerventils WV sowie über die Zuströmleitung 11 in den Kühler 10, wird dort noch etwas weiter rückgekühlt und strömt dann durch die Rückströmleitung 12 zurück zum Anschlußpunkt 31 und von da zum zweiten Wärmetauscher 6. Der Dampfkondensator 24 trägt in diesem Betriebszustand zur Dampfkühlung praktisch nicht oder nicht nennenswert bei, da der Versorgungsstrom s1, welcher über die Strecke s0-e0 des Wirbelkammerventils WV fließen kann, sehr klein ist. Dieser Schwachlaststrom ist durch gestrichelte Pfeile s01 symbolisiert, er wird vom Heizmedium (tertiäres Medium) gespeist und aufrechterhalten.

Werden nun im Zuge von Inspektions- oder Reparaturarbeiten und/oder im Falle eines Brennelementwechsels die beiden Isolierventile 27, 28 geschlossen, und werden dabei entsprechend auch das Heizmedium fördernde (nicht dargestellte) externe Pumpen abgeschaltet, dann geht der Steuerdruck in der Steuerleitung 30 so weit zurück, daß die Drosselwirkung des Steuerstroms c1 aufhört. Die Strecke s0-e0 des Wirbelkammerventils WV wird freigegeben, weil sich ihr Strömungswiderstand erheblich vermindert, so daß sich nun ein geschlossener Kühlkreislauf ergibt, welcher zusätzlich angefacht wird durch die forcierte Erwärmung des Mediums in den wärmetauschenden Rohren 24.1 des Dampfkondensators 24, und zwar deshalb, weil ja der erste und der zweite Wärmetauscher 4 bzw. 6 nicht mehr zur Wärmeabfuhr beitragen können. Die Steuerstäbe sind in diesem Nachwärmeabfuhr-Betriebsfall in den Reaktorkern 2 eingefahren, und so dient der Dampfkondensator 24 zur Abfuhr der Nachzerfallswärme. Das tertiäre Medium strömt über den heißen Strang 25.1, die Strecke s0-e0 des Wirbelkammerventils WV, die Zuströmleitung 11 zum Kühler 10, wird dort abgekühlt (es kann sich um einen Luftkühler oder Wasserkühler handeln), und strömt abgekühlt über die Rückströmleitung 12, den Anschlußpunkt 26 und den kalten Strang 25.2 zurück zu den wärmetauschenden Rohren 24.1 des Dampfkondensators 24. Wie man sieht, erfolgt das Anfachen der Nachzerfallswärme-Abfuhr beim Ausführungsbeispiel nach Figur 8, ohne daß zusätzliche Ventile im Nachwärmeabfuhr-Zweig 10, 11, 12 geöffnet werden müssen; das Wirbelkammerventil WV übernimmt die automatische Umschaltung, wenn der Steuerdruck an seinem Steueranschluß c0 einen Minimalwert unterschreitet, und schaltet wieder zurück in den Normalbetrieb, wenn der Steuerdruck an dem Steueranschluß c0 den Minimalwert überschreitet.

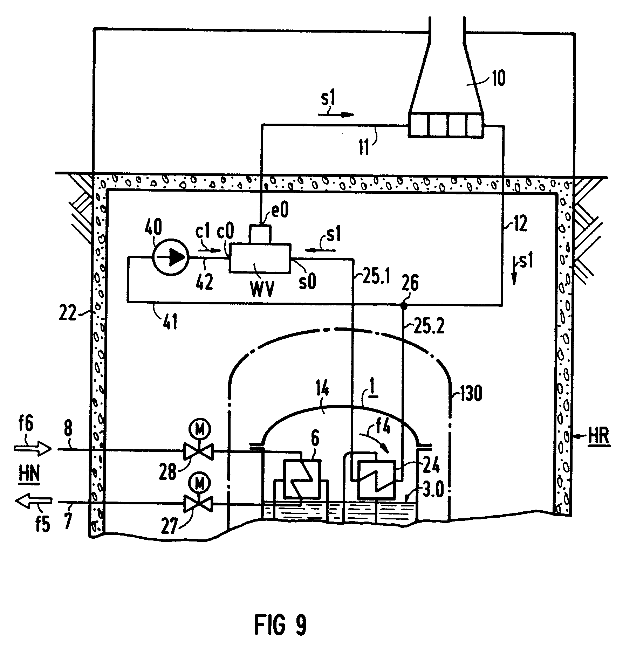

Eine Variante zum Heizreaktorsystem nach Figur 8 ist in Figur 9 dargestellt. Dabei wird der Steuerdruck für den Steueranschluß c0 des Wirbelkammerventils WV nicht durch Drosseln der Strömung in der Rücklaufleitung 8 des Heiznetzes erzeugt, sondern durch eine in einen Steuerstrompfad 41, 42 eingefügte Steuerstrompumpe 40, welche über eine Saugleitung 41 am Anschlußpunkt 26 an die Rückströmleitung 12 und über eine Druckleitung 42 an den Steueranschluß c0 des Wirbelkammerventils WV angeschlossen ist. Die Steuerstrompumpe 40 arbeitet im normalen Heizbetrieb des darstellten Heizreaktors HR als Dauerläufer. Der von ihr geförderte Durchsatz ist relativ klein, so daß man mit einer kleinen Steuerstrompumpe auskommt. Durch die Steuerstrompumpe 40 wird im Normalbetrieb des Heizreaktors HR ein den internen steuerbaren Strompfad s0-e0 des Wirbelkammerventils WV absperrender oder stark drosselnder Steuerdruck erzeugt. Wird der Heizreaktor HR abgeschaltet - dies geschieht durch das vollständige Einfahren der nicht dargestellten Steuerstäbe in den Kern des Heizreaktors HR - , dann wird auch die Steuerstrompumpe 40 abgeschaltet. Es ist vorteilhaft, die Mittel zur Stillsetzung der Steuerstrompumpe 40 in Steuerabhängigkeit von dem Einfahrbefehl für die (nicht dargestellten) Steuerstäbe zu bringen. Zum Beispiel kann vom elektrischen oder hydraulischen Befehl zum vollständigen Einfahren der Steuerstäbe und damit zum Abschalten des Heizreaktors ein elektrischer Befehl abgeleitet werden, welcher z.B. über ein Relais oder einen elektronischen Schalter die Stromversorgung für den Antriebsmotor der Steuerstrompumpe 40 unterbricht. Andererseits wird das Relais oder der elektronische Schalter bei Wiederanfahren des Heizreaktors HR so gesteuert, daß der Motor wieder eingeschaltet wird und die Pumpe 40 zu laufen beginnt. Bei abgeschalteter Steuerstrompumpe 40 ist der steuerbare Strompfad s0-e0 des Wirbelkammerventils WV zur ungedrosselten Durchströmung freigegeben, so daß sich, wie anhand von Figur 8 bereits erläutert, über den heißen Strang 25.1 des Dampfkondensators 24, den geöffneten Strompfad s0-e0, die Zuströmleitung 11, den Kühler 10, die Rückströmleitung 12 und den kalten Strang 25.2 des Dampferzeugers 24 zurück zu den wärmetauschenden Rohren 24.1 dieses Dampferzeugers ein Naturumlauf ausbildet, durch welchen die im Heizreaktor HR entstehende Nachzerfallswärme abgeführt wird. Im übrigen entspricht das Heizreaktorsystem nach Figur 9 demjenigen nach Figur 8. Dies ist der Grund, weshalb nur eine Ausschnittsdarstellung gewählt wurde.

Die Nachwärmeabfuhr-Schaltung nach Figur 9 mit ihrer Steuerstrompumpe 40, dem Wirbelkammerventil WV, dem Nachwärmeabfuhr-Zweig 11, 10, 12 und dem angeschlossenen Dampfkondensator 24 läßt sich mit Vorteil zur Abfuhr der Nachzerfallswärme bei einem Siedewasser-Kernreaktor oder auch bei einem Druckwasser-Kernreaktor verwenden, d.h. bei solchen Leichtwasser-Kernreaktoren, die zur Erzeugung von Treibdampf für einen Dampfturbosatz dienen. Ein solcher Dampfturbosatz weist eine vom Treibdampf beaufschlagte Dampfturbine und einen an die Dampfturbine angekoppelten Turbogenerator zur Erzeugung der elektrischen Energie auf. In diesem Falle werden ein Dampfkondensator oder mehrere davon innerhalb des Dampfplenums des Kernreaktors angeordnet, wobei die an ihre wärmetauschenden Rohre 24.1 angeschlossenen Leitungen für die heißen und kalten Stränge 25.1, 25.2 durch die Wand des Kernreaktors in entsprechenden druckdichten Durchführungen nach außen hindurchgeführt werden.

Im folgenden wird anhand von Figur 1 erläutert, daß auch die in den Figuren 1 bis 7 dargestellte Nachwärmeabfuhr-Schaltung grundsätzlich dazu geeignet ist, die Nachzerfallswärme bei einem Siedewasser-Kernreaktor oder einem Druckwasser-Kernreaktor abzuführen. Zur Erläuterung wird im folgenden nur auf die beiden Stränge zk1 des Zwischenkreislaufs ZK Bezug genommen; es versteht sich jedoch, daß mehr als ein Strangpaar zk1 zur Nachwärmeabfuhr herangezogen werden kann.

Gemäß der einen Ausführungsform ist auf der Sekundärseite des ersten Wärmetauschers 4 der zweite Wärmetauscher 6 durch ein die beiden Sekundärkühlmittelstränge 9.1, 9.2 verbindendes, gestrichelt dargestelltes Leitungsstück 50 ersetzt. Das hat zur Folge, daß im Normalbetrieb des (nicht dargestellten) Kernreaktors das Sekundärkühlmittel durch die Pumpe 5 zur Erzeugung des Steuerdruckes für den Steueranschluß c0 des Wirbelkammerventils WV umgewälzt wird. Diese Pumpe 5 arbeitet dann ebenso wie die Steuerstrompumpe 40 als Dauerläufer zur Erzeugung des Steuerdruckes. Da in diesem Falle ein externes Heiznetz HN nicht angeschlossen ist, können die Leitungen für den heißen und kalten Strang 9.1, 9.2 verkürzt werden. Der steuerbare Strompfad s0-e0 des Wirbelventils WV ist abgesperrt oder sehr stark gedrosselt, wie bereits mehrfach erläutert. Erst wenn bei dem Siedewasser- oder Druckwasser-Kernreaktor die Steuerstäbe in ihre vollständige Abschaltposition verfahren werden, wird ein Steuerbefehl zur Abschaltung des Antriebsmotors der Pumpe 5 gegeben, und damit wird der steuerbare Strompfad des Wirbelkammerventils WV freigegeben; der Nachwärmeabfuhr-Betrieb im Naturumlauf setzt sofort ein. Das in den wärmetauschenden Rohren 4.1 des ersten Wärmetauschers 4 aufgeheizte Sekundärkühlmittel strömt über den heißen Strang, den Leitungsabschnitt 11.1, den Strompfad s0-e0 des Wirbelkammerventils WV, die Zuströmleitung 11, den Kühler 10a, die Rückströmleitung 12 zurück zum kalten Strang 9.2 und von dort zum Wärmetauscher 4, wobei das Sekundärkühlmittel im Kühler 10a fortlaufend gekühlt und so die Nachzerfallswärme abgeführt wird. Bei diesem Ausführungsbeispiel ist der erste, im Wasservolumen 3 des Siedewasser- oder Druckwasser-Kernreaktors angeordnete Wärmetauscher 4 als Wärmesenke zur Abfuhr der Nachzerfallswärme ausgenutzt; die beiden Leitungen 9.1 und 9.2 für seinen heißen und kalten Strang müssen wieder durch die Wand des Reaktordruckbehälters druckdicht nach außen hindurchgeführt werden. Diese Leitungsdurchführungen können im Deckel oder in der Mantelwand des nicht dargestellten Reaktordruckbehälters vorgesehen sein.

Gemäß der zweiten Ausführungsform der Verwendung der Nachwärmeabfuhr-Schaltung mit Wirbelkammerventil für Siedewasser- oder Druckwasser-Kernreaktoren wird entsprechend zum Ausführungsbeispiel nach Figur 9 auf die Pumpe 5 verzichtet. Es genügt für die betrachteten Zwischenkreislauf-Stränge zk1, wenn diese nur bis zu den gestrichelt angedeuteten Schnittstellen 61, 62 reichen. Statt der Pumpe 5 im kalten Strang 9.2 wird bei dieser Ausführung eine Steuerstrompumpe 60 im Steuerstrompfad 13 angeordnet. Diese Pumpe 60 ist ebenfalls nur gestrichelt dargestellt, da es sich um eine Variante im Rahmen einer Verwendung handelt. Die Steuerstrompumpe 60 ist über einen Saugleitungsteil 13.1 des Steuerstrompfades 13 an die Rückströmleitung 12 angeschlossen (oder an das damit verbundene Leitungsstück des heißen Stranges 9.2) und über einen Druckleitungsteil 13.2 des Steuerstrompfades 13 an den Steueranschluß c0 des Wirbelkammerventils WV. Wie anhand von Figur 9 bereits erläutert wurde, wird auch bei dieser Ausführung durch die Steuerstrompumpe 60 im Normalbetrieb des (nicht dargestellten) Kernreaktors ein den internen steuerbaren Strompfad s0-e0 des Wirbelkammerventils WV absperrender oder stark drosselnder Steuerdruck erzeugt. Ebenso sind wieder (nicht dargestellte) Mittel zur Stillsetzung der Steuerstrompumpe 60 bei Abschaltung des Kernreaktors vorgesehen, welche anhand von Figur 9 bereits näher erläutert wurden. Der Vorteil dieser Ausführung liegt darin, daß der Durchsatz der Steuerstrompumpe 60 nur etwa 10 bis 20 % des Durchsatzes beträgt, welchen die Pumpe 5 umwälzen müßte; die Steuerstrompumpe kann deshalb eine relativ kleine Pumpe sein.

## Patentansprüche

1. Heizreaktorsystem, insbesondere für Leichtwasserreaktoren, mit einem Kernreaktor und einem zugehörigen Reaktordruckbehälter (1), dessen Kern (2) von einem umwälzbaren Primärkühlmittel (3) kühlbar ist, mit einem ersten (4), zweiten (6) und gegebenenfalls einem dritten (24) Wärmetauscher, wobei die Primärseiten des ersten und gegebenenfalls dritten Wärmetauschers (4, 24) vom Primärmedium (3) durchströmbar sind und die Primärseite des zweiten Wärmetauschers (6) mit der Sekundärseite des ersten Wärmetauschers (4) über einen Zwischenkreislauf (ZK) für ein Sekundärkühlmittel verbunden ist, und mit einer Nachwärmeabfuhr-Schaltung (10, 11, 12), welche einen Nachwärmeabfuhr-Kühler (10) enthält, welche über Kühler-Anschlußleitungen in Form einer Zuströmleitung (11) und einer Rückströmleitung (12) an die Sekundärseite des ersten Wärmetauschers (4) oder des gegebenenfalls dritten Wärmetauschers (245) angeschlossen ist und in deren Kühler-Anschlußleitungen (11, 12) wenigstens ein Durchsatz-Stellorgan eingefügt ist,
mit dem weiteren Merkmal, daß als Durchsatz-Stellorgan ein Wirbelkammerventil (WV) vorgesehen ist.

2. Heizreaktorsystem nach Anspruch 1, mit einer Pumpe (5) im Zwischenkreislauf (ZK),
**dadurch gekennzeichnet,** daß das Wirbelkammerventil (WV) einen Versorgungsanschluß (s0), einen Steueranschluß (c0) und einen Auslaßanschluß (e0) besitzt und daß der Versorgungsanschluß (s0) an den heißen Strang (9.1), der Auslaßanschluß (e0) über den Nachwärmeabfuhr-Kühler (10) an den kalten Strang (9.2) und der Steueranschluß (c0) auf der Druckseite der Pumpe (5) ebenfalls an den kalten Strang (9.2) des Zwischenkreislaufs (ZK) angeschlossen ist.

3. Heizreaktorsystem nach Anspruch 1 oder 2,
**dadurch gekennzeichnet,** daß das Wirbelkammerventil (WV) in die Zuströmleitung (11) des Nachwärmeabfuhr-Kühlers (10) eingefügt ist.

4. Heizreaktorsystem nach einem der Ansprüche 1 bis 3, wobei im Reaktordruckbehälter (1) ein den Kern (2) bedeckendes Wasservolumen (3) als Primärkühlmittel enthalten ist,
**dadurch gekennzeichnet,** daß der erste Wärmetauscher (4) im Wasservolumen (3) mit Abstand oberhalb zur Kernoberkante (2.0) angeordnet und primärseitig vom Primärkühlmittel aufheizbar ist und daß die an die wärmetauschenden Rohre des ersten Wärmetauschers (4) angeschlossenen Leitungen (9.1, 9.2) des Zwischenkreislaufes (ZK) durch die Wand des Reaktordruckbehälters (1) nach außen hindurchgeführt sind.

5. Heizreaktorsystem nach Anspruch 4, wobei im Reaktordruckbehälter (1) oberhalb des Wasservolumens (3) sich ein Dampfplenum (14) befindet,
**dadurch gekennzeichnet,** daß auch der zweite Wärmetauscher (6) in integrierter Bauweise innerhalb des vom Reaktordruckbehälter (1) umschlossenen Raumes, vorzugsweise innerhalb des Dampfplenums (14), angeordnet ist.

6. Heizreaktorsystem nach Anspruch 5,
**dadurch gekennzeichnet,** daß eine Vorlaufleitung (7) sowie eine Rücklaufleitung (8), welche an die wärmetauschenden Rohre (6.1) des zweiten Wärmetauschers (6) angeschlossen sind, durch die Wand des Reaktordruckbehälters (1) nach außen hindurchgeführt und an ein externes Heiznetz (HN) angeschlossen sind.

7. Heizreaktorsystem nach einem der Ansprüche 1 bis 6,
**dadurch gekennzeichnet,** daß die vom ersten Wärmetauscher (4) abgehenden Leitungen für den heißen Strang (9.1) und den kalten Strang (9.2) des Zwischenkreislaufes (ZK) oder die vom zweiten im Reaktordruckbehälter (1) angeordneten Wärmetauscher (6) abgehende Vorlauf- bzw. Rücklaufleitung (7, 8) durch die Mantelwand (103) des Reaktordruckbehälters (1) unterhalb seiner Deckelflanschverbindung (101, 102) hindurchgeführt sind.

8. Heizreaktorsystem nach einem der Ansprüche 1 oder 5,
**dadurch gekennzeichnet,** daß der dritte Wärmetauscher (24) ein Dampfkondensator ist, welcher im Dampfplenum (14) der Reaktordruckbehälters (1) angeordnet ist.

9. Heizreaktorsystem nach Anspruch 8, wobei Zu- und Rückströmleitungen (11, 12) des Nachwärmeabfuhr-Kühlers (10) an die Sekundärseite des dritten Wärmetauschers (24) angeschlossen sind,
**dadurch gekennzeichnet,** daß durch den zwischen Versorgungsanschluß (s0) und Auslaßanschluß (e0) gebildeten internen steuerbaren Strompfad (s0-e0) des Wirbelkammerventils (WV) die Zuströmleitung (11) des Nachwärmeabfuhr-Kühlers (10) mit dem heißen Strang (25.1) der Sekundärseite des dritten Wärmetauschers (24) verbindbar ist.

10. Heizreaktorsystem nach Anspruch 8 oder 9,
**dadurch gekennzeichnet,** daß in die Rücklaufleitung (8) eines externen Heiznetzes (HN) eine einstellbare Drossel (29) eingefügt ist, mit deren Druckseite eine zum Steueranschluß (c0) des Wirbelkammerventils (WV) führende Steuerleitung (30) verbunden ist, und daß die Rückströmleitung (12) des Nachwärmeabfuhr-Kühlers (10) außer an den kalten Strang (25.2) mit einem Leitungszweig (12.1) an die der Druckseite abgewandte Seite der Drossel (29) angeschlossen ist.

11. Heizreaktorsystem nach Anspruch 8 oder 9,
**dadurch gekennzeichnet,** daß eine in einem Steuerstrompfad (41, 42) liegende Steuerstrompumpe (40) über eine Saugleitung (41) an die Rückströmleitung (12) und über eine Druckleitung (42) an den Steueranschluß (c0) des Wirbelkammerventils (WV) angeschlossen ist, wobei durch die Steuerstrompumpe (40) im Normalbetrieb des Heizreaktors (HR) ein den internen steuerbaren Strompfad (s0-e0) des Wirbelkammerventils (WV) absperrender oder stark drosselnder Steuerdruck erzeugbar ist und wobei Mittel zur Stillsetzung der Pumpe (40) bei Abschaltung des Heizreaktors (HR) vorgesehen sind.

12. Verwendung des Heizreaktorsystems mit Nachwärmeabfuhr-Schaltung (10, 11, 12) und mit Wirbelkammerventil (WV) nach einem der Ansprüche 1 bis 11 zur Abfuhr der Nachzerfallswärme bei einem Siedewasser-Kernreaktor oder einem Druckwasser-Kernreaktor, die zur Erzeugung von Treibdampf für einen Dampfturbosatz dienen.

13. Verwendung nach Anspruch 12,
**dadurch gekennzeichnet,** daß auf der Sekundärseite des ersten Wärmetauschers (4) der zweite Wärmetauscher (6) durch ein die beiden Sekundärkühlmittelstränge (9.1, 9.2) verbindendes Leitungsstück (50) ersetzt ist, so daß im Normalbetrieb des Kernreaktors das Sekundärkühlmittel durch die Pumpe (5) zur Erzeugung des Steuerdruckes für den Steueranschluß (c0) des Wirbelkammerventils (WV) umwälzbar ist, wobei Mittel zur Stillsetzung der Pumpe (5) bei Abschaltung des Kernreaktors vorgesehen sind.

14. Verwendung nach Anspruch 12,
**dadurch gekennzeichnet,** daß eine in einem Steuerstrompfad (13) liegende Steuerstrompumpe (60) über einen Saugleitungsteil (13.1) an die Rückströmleitung (12) und über einen Druckleitungsteil (13.2) an den Steueranschluß (c0) des Wirbelkammerventils (WV) angeschlossen ist, wobei durch die Steuerstrompumpe (60) im Normalbetrieb des Kernreaktors ein den internen steuerbaren Strompfad (s0-e0) des Wirbelkammerventils (WV) absperrender oder stark drosselnder Steuerdruck erzeugbar ist und wobei Mittel zur Stillsetzung der Steuerstrompumpe (60) bei Abschaltung des Kernreaktors vorgesehen sind.

## Claims

1. Heating reactor system, in particular for light water reactors, having a nuclear reactor and an associated reactor pressure vessel (1), the core (2) of which can be cooled by a primary coolant (3) capable of circulation, having a first (4), a second (6) and possibly a third (24) heat exchanger, whereby primary coolant (3) can flow through the primary sides of the first and possibly the third heat exchanger (4, 24), and the primary side of the second heat exchanger (6) is connected to the secondary side of the first heat exchanger (4) by way of an intermediate circuit (ZK) for a secondary coolant, and having a residual heat removal circuit (10, 11, 12) which comprises a residual heat removal cooler (10) which is connected by way of cooler connection pipes in the form of an influx pipe (11) and a reflux pipe (12) to the secondary side of the first heat exchanger (4) or possibly the third heat exchanger (24), and at least one flow rate regulating unit being inserted in the cooler connection pipes (11, 12) of the said heat exchanger, having the further feature that a vortex chamber valve (WV) is provided as the flow rate regulating unit.

2. Heating reactor system according to claim 1, having a pump (5) in the intermediate circuit (ZK), characterised in that the vortex chamber valve (WV) has a supply connection (sO), a control connection (cO) and an outlet connection (eO) and in that the supply connection (sO) is connected to the hot line (9.1), the outlet connection (eO) is connected to the cold line (9.2) by way of the residual heat removal cooler (10) and the control connection (cO) on the delivery side of the pump (5) is also connected to the cold line (9.2) of the intermediate circuit (ZK).

3. Heating reactor system according to claim 1 or 2, characterised in that the vortex chamber valve (WV) is inserted in the influx pipe (11) of the residual heat removal cooler (10).

4. Heating reactor system according to one of claims 1 to 3, whereby a volume of water (3) covering the core (2) is contained in the reactor pressure vessel (1) as the primary coolant, characterised in that the first heat exchanger (4) is arranged within the volume of water (3) at a distance above the upper edge (2.0) of the core and can be heated on the primary side by the primary coolant, and in that the pipes (9.1, 9.2) of the intermediate circuit (ZK) connected to the heat exchanger tubes of the first heat exchanger (4) are guided to the outside through the wall of the reactor pressure vessel (1).

5. Heating reactor system according to claim 4, whereby a steam plenum (14) is located above the volume of water (3) in the reactor pressure vessel (1), characterised in that the second heat exchanger (6) is also arranged as an integral part within the space enclosed by the reactor pressure vessel (1), preferably within the steam plenum (14).

6. Heating reactor system according to claim 5, characterised in that a flow pipe (7) and a return pipe (8) which are connected to the heat exchanger tubes (6.1) of the second heat exchanger (6) are guided to the outside through the wall of the reactor pressure vessel (1) and are connected to an external heat supply network (HN).

7. Heating reactor system according to one of claims 1 to 6, characterised in that the pipes for the hot line (9.1) and for the cold line (9.2) of the intermediate circuit (ZK) leaving the first heat exchanger (4), or the flow pipe and the return pipe (7, 8) leaving the second heat exchanger (6) arranged in the reactor pressure vessel (1) are guided through the casing wall (103) of the reactor pressure vessel (1) below the cover flange connection (101, 102) thereof.

8. Heating reactor system according to one of claims 1 or 5, characterised in that the third heat exchanger (24) is a steam condenser which is arranged in the steam plenum (14) of the reactor pressure vessel (1).

9. Heating reactor system according to claim 8, whereby influx and reflux pipes (11, 12) of the residual heat removal cooler (10) are connected to the secondary side of the third heat exchanger (24), characterised in that influx pipe (11) of the residual heat removal cooler (10) can be connected to the hot line (25.1) of the secondary side of the third heat exchanger (24) by means of the controllable internal current path (sO - eO) of the vortex chamber valve (WV) formed between the supply connection (sO) and the outlet connection (eO).

10. Heating reactor system according to claim 8 or 9, characterised in that an adjustable throttle (29) is inserted in the return pipe (8) of an external heat supply network (HN), the pressure side of this throttle being connected to a control pipe (30) leading to the control connection (cO) of the vortex chamber valve (WV), and in that the reflux pipe (12) of the residual heat removal cooler (10) is connected by means of a pipe branch (12.1) to the side of the throttle (29) facing away from the pressure side as well as to the cold line (25.2)

11. Heating reactor system according to claim 8 or 9, characterised in that a control current pump (40) located in a control current path (41, 42) is connected to the reflux pipe (12) by way of a suction pipe (41) and to the control connection (cO) of the vortex chamber valve (WV) by way of a pressure pipe (42), whereby a control pressure blocking or sharply throttling the controllable internal current path (sO - eO) of the vortex chamber valve (WV) can be generated by the control current pump (40) during normal operation of the heating rector (HR), and whereby means are provided for stopping the pump (40) during shutdown of the heating reactor (HR).

12. Application of the heating reactor system having a residual heat removal circuit (10, 11, 12) and having a vortex chamber valve (WV) according to one of claims 1 to 11 for removing the afterheat in a boiling water nuclear reactor or a pressurized water nuclear reactor which serve to generate driving steam for a steam turbine set.

13. Application according to claim 12, characterised in that the second heat exchanger (6) on the secondary side of the first heat exchanger (4) is replaced by a pipe section (50) connecting the two secondary coolant lines (9.1, 9.2) so that the secondary coolant can be circulated by the pump (5) during normal operation of the nuclear reactor to generate the control pressure for the control connection (cO) of the vortex chamber valve (WV), whereby means are provided for stopping the pump (5) during shutdown of the nuclear reactor.

14. Application according to claim 12, characterised in that a control current pump (60) located in a control current path (13) is connected to the reflux pipe (12) by way of a suction pipe section (13.1) and to the control connection (cO) of the vortex chamber valve (WV) by way of a pressure pipe section (13.2), whereby a control pressure blocking or sharply throttling the controllable internal current path (sO - eO) of the vortex chamber valve (WV) can be generated by the control current pump (60) during normal operation of the nuclear reactor, and whereby means are provided for stopping the control current pump (60) during shutdown of the nuclear reactor.

## Revendications

1. Système à réacteur de chauffage, notamment pour réacteurs à eau légère, comprenant un réacteur nucléaire et sa cuve de réacteur (1) sous pression, dont le coeur (2) peut être refroidi par un fluide de refroidissement (3) primaire qui peut être remis en circulation, un premier (4) et second (6) et éventuellement un troisième (24) échangeurs de chaleur, du fluide primaire (3) pouvant passer dans les côtés primaires du premier et, le cas échéant, du troisième échangeur de chaleur (4, 24), tandis que le côté primaire du deuxième échangeur de chaleur (6) communique avec le côté secondaire du premier échangeur de chaleur (4) par un circuit intermédiaire (ZK) pour un fluide de refroidissement secondaire et un circuit (10, 11, 12) d'évacuation de la chaleur résiduelle qui comporte un dispositif de refroidissement (10) d'évacuation de la chaleur résiduelle raccordé, par des conduits de raccordement des dispositifs de refroidissement affectant la forme d'un conduit d'entrée (11) et d'un conduit de retour (12), au côté secondaire du premier échangeur de chaleur (4) ou de l'éventuel troisième échangeur de chaleur (4, 24) et dans les conduits de raccordement (11, 12) au dispositif de refroidissement duquel est monté au moins un organe de réglage du débit, avec la caractéristique supplémentaire qu'il est prévu, comme organe de réglage du débit, une vanne à chambre de tourbillonnement (WV).

2. Système à réacteur de chauffage suivant la revendication 1, ayant une pompe (5) dans le circuit intermédiaire (ZK),
caractérisé en ce que la vanne à chambre de tourbillonnement (WV) possède un raccord d'alimentation (sO), un raccord de commande (cO) et un raccord de sortie (eO) et en ce que le raccord d'alimentation (sO) est raccordé à la branche (9.1) chaude, le raccord de sortie (eO) à la branche (9.2) froide par le dispositif de refroidissement (10) d'évacuation de la chaleur résiduelle et le raccord de commande (cO) par le côté refoulement de la pompe (5) également à la branche (9.2) froide du circuit intermédiaire (ZK).

3. Système à réacteur de chauffage suivant la revendication 1 ou 2,
caractérisé en ce que la vanne de la chambre de tourbillonnement (WV) est insérée dans le conduit d'entrée (11) du dispositif de refroidissement (10) d'évacuation de la chaleur résiduelle.

4. Système à réacteur de chauffage suivant l'une des revendications 1 à 3, dans lequel la cuve du réacteur (1) sous pression contient comme fluide de refroidissement primaire un volume (3) d'eau recouvrant le coeur (2),
caractérisé en ce que le premier échangeur de chaleur (4) est disposé dans le volume d'eau (3) à distance au-dessus du bord supérieur (2.0) du coeur et peut être chauffé, du côté primaire, par le fluide de refroidissement primaire, et en ce que les conduits (9.1, 9.2) du circuit intermédiaire (ZK) raccordés au tube échangeur de chaleur du premier échangeur de chaleur (4) passent à l'extérieur à travers la paroi de la cuve du réacteur (1) sous pression.

5. Système à réacteur de chauffage suivant la revendication 4, dans lequel une chambre d'accumulation (14) de vapeur se trouve dans la cuve du réacteur (1) sous pression, au-dessus du volume (3) d'eau,
caractérisé en ce que le deuxième échangeur de chaleur (6) également est disposé en y étant intégré à l'intérieur de l'espace fermé par la cuve du réacteur (1) sous pression, de préférence à l'intérieur de la chambre d'accumulation (14) de vapeur.

6. Système à réacteur de chauffage suivant la revendication 5,
caractérisé en ce qu'un conduit de sortie (7) ainsi qu'un conduit de retour (8), qui sont raccordés aux tubes (6.1) échangeurs de chaleur du second échangeur de chaleur (6), passent vers l'extérieur à travers la paroi de la cuve du réacteur (1) sous pression et sont raccordés à un réseau (HN) extérieur de chauffage.

7. Système à réacteur de chauffage suivant l'une des revendications 1 à 6,
caractérisé en ce que les conduits partant du premier échangeur de chaleur (4) pour la branche (9.1) chaude et pour la branche (9.2) froide du circuit intermédiaire (ZK) ou le conduit d'entrée (7) et de retour (8) partant du deuxième échangeur de chaleur (6) disposé dans la cuve du réacteur (1) sous pression passent à travers la paroi (103) latérale de la cuve du réacteur (1) sous pression, en-dessous de sa liaison (101, 102) bridée de couvercle.

8. Système à réacteur de chauffage suivant l'une des revendications 1 ou 5,
caractérisé en ce que le troisième échangeur de chaleur (24) est un condenseur de vapeur qui est disposé dans la chambre (14) d'accumulation de vapeur de la cuve du réacteur (1) sous pression.

9. Système à réacteur de chauffage suivant la revendication 8, dans lequel des conduits d'entrée et de retour (11, 12) du dispositif de refroidissement (10) d'évacuation de la chaleur résiduelle sont raccordés au côté secondaire du troisième échangeur de chaleur (24),
caractérisé en ce que, par le trajet de courant (sO-eO) de la vanne à chambre de tourbillonnement (WV), trajet de courant qui peut être commandé de manière interne et qui est formé entre le raccord d'alimentation (sO) et le raccord de sortie (eO), le conduit (11) d'entrée du dispositif de refroidissement (10) d'évacuation de la chaleur résiduelle peut communiquer avec la branche (25.1) chaude du côté secondaire du troisième échangeur de chaleur (24).

10. Système à réacteur de chauffage suivant la revendication 8 ou 9,
caractérisé en ce que, dans le conduit (8) de retour d'un réseau (HN) extérieur de chauffage, est inséré un étranglement (29) réglable, au côté refoulement duquel est relié un conduit (30) de commande menant au raccord de commande (cO) de la vanne à chambre à tourbillonnement (WV), en ce que le conduit (12) de retour du dispositif de refroidissement (10) d'évacuation de la chaleur résiduelle est raccordé, outre à la branche (25.2) froide, par une dérivation (12.1), au côté de l'étranglement (29) éloigné du côté refoulement.

11. Système à réacteur de chauffage suivant la revendication 8 ou 9,
caractérisé en ce qu'une pompe (40) à courant de commande se trouvant dans le trajet (41, 42) du courant de commande est reliée, par un conduit d'aspiration (41), au conduit de retour (12) et, par un conduit de refoulement (42), au raccord de commande (cO) de la vanne à chambre à tourbillonnement (WV) de manière à pouvoir obtenir, par la pompe (40) à courant de commande en fonctionnement normal du réacteur de chauffage (HR), une pression de commande fermant ou étranglant fortement le trajet (sO-eO) du courant de la vanne à chambre à tourbillonnement (WV), trajet qui peut être commandé de manière interne, des moyens de mise à l'arrêt de la pompe (40) étant prévus lors du débranchement du réacteur de chauffage (HR).

12. Utilisation du système à réacteur de chauffage à circuits (10, 11, 12) d'évacuation de la chaleur résiduelle et à vanne à chambre à tourbillonnement (WV) suivant l'une des revendications 1 à 11, pour évacuer la chaleur de décomposition résiduelle dans un réacteur nucléaire à eau bouillante ou dans un réacteur nucléaire à eau sous pression, qui servent à produire de la vapeur d'entraînement pour un turbo-générateur à vapeur.

13. Utilisation suivant la revendication 12,
caractérisée en ce que, du côté secondaire du premier échangeur de chaleur (4), le deuxième échangeur de chaleur (6) est remplacé par un tronçon de conduit (50) reliant les deux branches (9.1, 9.2) pour le fluide de refroidissement secondaire, de sorte qu'en fonctionnement normal du réacteur nucléaire, le fluide de refroidissement secondaire puisse être mis en circulation par la pompe (5) pour produire la pression de commande pour le raccord de commande (cO) de la vanne à chambre à tourbillonnement (WV), des moyens de mise à l'arrêt de la pompe (5) étant prévus lors du débranchement du réacteur nucléaire.

14. Utilisation suivant la revendication 12,
caractérisée en ce qu'une pompe (60) à courant de commande se trouvant dans un trajet (13) de courant de commande est raccordée par une partie (13.1) de conduit d'aspiration au conduit (12) de retour et, par une partie (13.2) de conduit de refoulement, au raccord de commande (cO) de la vanne à chambre à tourbillonnement (WV), de manière à pouvoir produire, par la pompe (60) à courant de commande, un fonctionnement du réacteur nucléaire, une pression de commande fermant ou étranglant fortement le trajet de courant (sO-eO) de la vanne à chambre à tourbillonnement (WV), trajet qui peut être commandé de manière interne, des moyens de mise à l'arrêt de la pompe (60) de courant de commande, lors du débranchement du réacteur nucléaire, étant prévus.
